# FASCICULE DE BREVET EUROPEEN

(11) **EP 0 789 443 B1**
(45) Date de publication et mention de la délivrance du brevet: **19.07.2000**
(21) Numéro de dépôt: 97400280.0
(22) Date de dépôt: 07.02.1997
(51) Int. Cl.: H02K 49/04

(54) **Transmission de véhicule équipée d'un ralentisseur électrique**
Fahrzeuggetriebe versehen mit einem elektrischen Retarder
Vehicle transmission equipped with an electric retarder

(30) Priorité: 12.02.1996 FR 9601689
(43) Date de publication de la demande: 13.08.1997
(73) Titulaire: LABINAL, 78180 Montigny le Bretonneux (FR)
(72) Inventeur: Rugraff, Guy, 93500 Pantin (FR)
(74) Mandataire: Burbaud, Eric

(56) Documents cités:
- EP-A- 0 403 714
- FR-A- 1 386 434

## Description

L'invention est relative aux transmissions pour véhicules terrestres à moteur, c'est-à-dire aux dispositifs transmettant le mouvement de rotation du moteur jusqu'aux roues des véhicules.

Parmi ces transmissions, l'invention concerne plus spécialement celles qui comprennent :
- un mécanisme de transmission (boîte de vitesses, pont, ou autre) entraîné par le moteur du véhicule et présentant un carter ainsi qu'un arbre de sortie rotatif autour d'un axe,
- un joint de cardan qui est monté sur l'arbre de sortie du mécanisme de transmission,
- et un ralentisseur électrique à courants de Foucault comportant d'une part un stator inducteur annulaire qui est monté en porte-à-faux sur le carter à l'aide d'une ossature et qui présente une couronne de bobines disposée autour du joint de cardan, et d'autre part un rotor qui inclut des première et deuxième roues, chacune de ces roues comprenant un disque induit en matériau ferromagnétique et une pluralité d'aubages formant ailettes de refroidissement, la première roue étant proche du carter et la deuxième roue étant plus éloignée dudit carter, ces deux roues encadrant axialement le stator et étant solidarisées à l'arbre de sortie du mécanisme de transmission au moyen d'un tube intercalaire qui s'étend axialement entre des première et deuxième extrémités en entourant le joint de cardan, la première extrémité du tube intercalaire étant montée sur un organe de support qui est solidaire de l'arbre de sortie du mécanisme de transmission et la deuxième extrémité de ce tube intercalaire étant solidaire de la deuxième roue du rotor.

Le document FR-A-2 648 638 décrit une telle transmission de véhicule.

La présente invention a pour but de perfectionner la transmission de véhicule décrite dans ce document, notamment de façon à permettre de diminuer son encombrement diamétral, compte tenu du fait que la place disponible à l'intérieur d'un véhicule au voisinage du mécanisme de transmission est limitée.

A cet effet, selon l'invention, une transmission du genre en question est caractérisée en ce que la première extrémité du tube intercalaire est également solidaire de la première roue du rotor, et en ce que les première et deuxième extrémités du tube intercalaire sont disposées axialement de part et d'autre de la couronne de bobines du stator et de part et d'autre du joint de cardan.

Grâce à ces dispositions, le tube intercalaire occupe un espace radial très réduit entre d'une part le joint de cardan, et d'autre part la couronne de bobines du stator, ce qui permet soit de diminuer l'encombrement diamétral du ralentisseur électrique, soit, à encombrement total égal, d'accepter des joints de cardan plus gros à l'intérieur du tube intercalaire.

En effet, dans la transmission selon l'invention, seule la partie centrale, c'est-à-dire la partie du tube intercalaire qui ne présente aucun dispositif de fixation encombrant, doit être interposée entre le joint de cardan et la couronne de bobines du stator, alors que dans le dispositif décrit dans le document susmentionné, il était nécessaire de prévoir un jeu radial beaucoup plus important entre le joint de cardan et le stator du fait qu'entre le tube intercalaire et la couronne de bobines étaient interposés des bras de fixation des deux roues du rotor, bras qui se rejoignaient au centre de la couronne de bobines du stator pour se fixer sur une bride extérieure du tube intercalaire.

Par ailleurs, grâce aux dispositions explicitées ci-dessus, la première roue du rotor est supportée par la première extrémité du rotor sans aucun porte-à-faux, puisque cette première extrémité est également fixée sur l'organe de support qui est solidaire de l'arbre de sortie, et seule la deuxième roue du rotor est supportée en porte-à-faux à la deuxième extrémité du tube intercalaire.

Par conséquent, le tube intercalaire est moins sollicité, donc peut être plus léger, moins épais et moins coûteux que dans les dispositifs de l'art antérieur où les deux roues étaient supportées en porte-à-faux par la deuxième extrémité du tube intercalaire.

Enfin, l'invention permet également de simplifier la structure des roues du rotor, puisque les bras de fixation des deux roues n'ont pas besoin de venir se rejoindre au centre du ralentisseur électrique comme dans les dispositifs de l'art antérieur. L'invention permet donc également de diminuer notablement le coût de fabrication des roues du rotor.

Dans des modes de réalisation préférés, on a recours en outre à l'une et/ou à l'autre des dispositions suivantes :
- le tube intercalaire comporte à ses deux extrémités des brides sur lesquelles sont fixées les deux roues ainsi que l'organe de support et qui font saillie radialement vers l'intérieur, le tube intercalaire présentant ainsi une surface extérieure sensiblement cylindrique ;
- chacune des roues du rotor présente une pluralité de bras de fixation qui s'étendent vers l'intérieur jusqu'à des extrémités respectives fixées latéralement sur la bride correspondante du tube intercalaire au moyen de vis ;
- au moins certaines des vis de fixation des roues du rotor traversent respectivement des bagues métalliques, chacune de ces bagues métalliques étant emboîtée à force simultanément dans deux alésages ménagés respectivement dans la bride correspondante du tube intercalaire et dans l'extrémité du bras de fixation correspondant ;
- les bras de fixation de la deuxième roue du rotor sont au nombre de quatre et sont disposés à angle droit les uns par rapport aux autres, et la bride située à la deuxième extrémité du tube intercalaire forme quatre échancrures intérieures disposées angulairement entre les bras de fixation de la deuxième roue ;
- l'organe de support du tube intercalaire est un plateau qui est vissé latéralement sur la bride située à la première extrémité du tube intercalaire et qui présente extérieurement des encoches dans lesquelles sont reçues les extrémités des bras de fixation de la première roue du rotor ;
- chacune des roues du rotor présente une pluralité de bras de fixation qui s'étendent tous selon un même plan radial ;
- le mécanisme de transmission est une boîte de vitesses.

Les caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue schématique partielle en coupe verticale d'une transmission de véhicule selon une forme de réalisation de l'invention, le plan de coupe étant localement décalé au niveau de deux vis de fixation de la plaque de fermeture du mécanisme de transmission et au niveau d'une vis de fixation du stator du ralentisseur électrique,
- la figure 2 est une vue schématique selon la direction II de la figure 1, montrant l'ossature qui supporte le stator du ralentisseur électrique,
- la figure 3 est une vue selon la direction III de la figure 1, montrant le rotor du ralentisseur électrique,
- la figure 3A est une vue de détail de la figure 3, en coupe,
- la figure 4 est une vue de détail en coupe axiale d'un tube intercalaire appartenant au rotor du ralentisseur électrique dans la transmission représentée sur la figure 1,
- les figures 5 et 6 sont des vues en bout du tube de la figure 4, respectivement selon les directions V et VI de la figure 4,
- et les vues 7 et 8 sont des vues partielles similaires respectivement aux figures 1 et 3 pour une variante du dispositif des figures 1 à 6.

Sur les différentes figures, les mêmes références désignent des éléments identiques ou similaires.

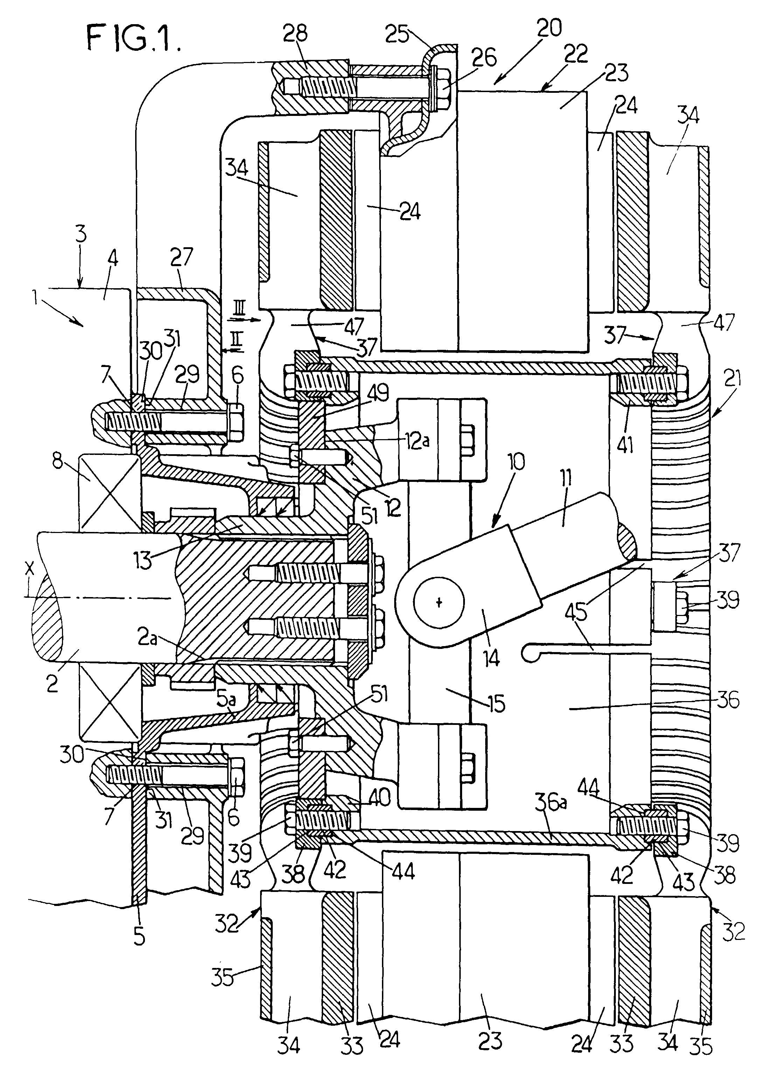

La figure 1 représente une partie d'une transmission de véhicule automobile, notamment poids lourd ou autobus.

Cette transmission comprend :
- une boîte de vitesses 1 entraînée par le moteur du véhicule (non représenté) et présentant un arbre de sortie 2 rotatif autour d'un axe X sensiblement horizontal,
- un joint de cardan 10 qui se trouve dans une position axiale standard, indépendante de la présence ou non d'un ralentisseur électrique, ce joint de cardan étant entraîné par l'arbre de sortie 2 et entraînant lui-même un arbre de liaison 11 qui s'étend en général jusqu'à un deuxième joint de cardan (non représenté) relié à un pont (non représenté), l'une 12 des fourches du joint de cardan 10 étant pourvue d'un manchon 13 cannelé intérieurement qui est emmanché sur l'extrémité de l'arbre de sortie 2, laquelle extrémité est dotée de cannelures extérieures 2a en correspondance avec les cannelures intérieures du manchon 13,
- et un ralentisseur électrique 20 à courants de Foucault monté en porte-à-faux sur la boîte de vitesses 1, ce type de ralentisseur étant connu sous la marque déposée "FOCAL".

Ces différents éléments vont maintenant être décrits plus en détail.

S'agissant tout d'abord de la boîte de vitesses 1, celle-ci est délimitée extérieurement par un carter 3 qui comprend d'une part un corps principal 4 et d'autre part une plaque de fermeture frontale 5.

La plaque de fermeture 5 ne présente pas de partie de support spécialement conçue pour le montage du ralentisseur électrique, et de façon plus générale, elle est conçue indépendamment de la présence ou non du ralentisseur électrique.

Cette plaque de fermeture 5 est fixée de façon étanche sur le corps principal 4 du carter au moyen de vis 6 qui traversent des trous 7 ménagés dans ladite plaque de fermeture et qui sont vissées dans le corps principal 4.

La plaque de fermeture 5 est disposée dans un plan général perpendiculaire à l'axe X et elle présente un nez central annulaire 5a qui fait saillie vers l'extérieur. Ce nez central 5a est traversé par l'arbre de sortie 2, et il reçoit en outre le manchon 13 de la fourche 12.

Par ailleurs, au voisinage de ce nez central 5a, l'arbre de sortie 2 est supporté par un palier d'extrémité constitué par un roulement 8 qui est standard et qui est dimensionné indépendamment de la présence ou non du ralentisseur électrique 20.

En ce qui concerne le ralentisseur électrique 20, celui-ci comprend, de façon connue en soi, un rotor induit 21 qui tourne avec l'arbre 2 et un stator inducteur 22 fixe comportant des bobines électromagnétiques 23 qui, lorsqu'elles sont parcourues par un courant électrique, génèrent des courants de Foucault dans le rotor 21, de sorte que ce rotor exerce un couple de freinage sur l'arbre 2.

Les bobines 23 du stator sont en nombre pair, et elles comportent chacune un noyau ferromagnétique (non représenté) qui s'étend longitudinalement parallèlement à l'axe X entre deux pôles 24. L'ensemble des pôles 24 forme deux couronnes centrées sur l'axe X, les pôles 24 de chaque couronne étant alternativement orientés Nord et Sud.

Les bobines 23 et leurs noyaux sont portés par un flasque 25 rigide en matériau amagnétique, qui présente une forme sensiblement annulaire et qui est lui-même fixé par des vis 26 à quatre bras 28 d'une ossature 27.

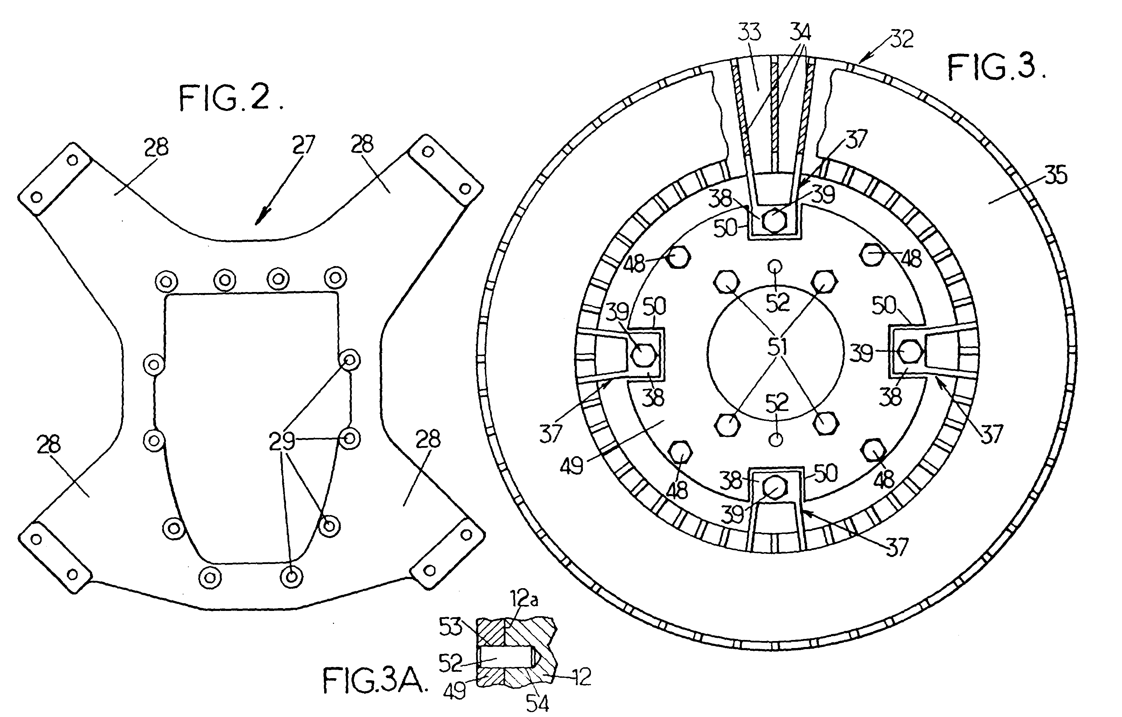

L'ossature 27, qui est bien visible sur les figures 1 et 2, est une pièce rigide qui peut être réalisée par exemple en fonte de type GS et qui présente des trous 29 en correspondance avec les trous 7 de la plaque de fermeture.

Ces trous 29 sont traversés par les vis 6 susmentionnées, dont les têtes s'appuient sur la face extérieure de l'ossature 27 pour fixer simultanément cette ossature et la plaque de fermeture 5 au corps principal 4 du carter, de sorte que la plaque de fermeture 5 est serrée entre l'ossature 27 et le corps principal 4.

Afin de permettre ce serrage dans de bonnes conditions, il serait éventuellement possible d'interposer des cales entre la plaque de fixation 5 et l'ossature 27 au droit des vis 6.

Mais de préférence, on usine des surfaces d'appui 30 annulaires, parfaitement planes et parfaitement perpendiculaires à l'axe X, sur la face extérieure de la plaque de fermeture 5 autour de chaque trou 7, et l'ossature 27 comporte pareillement des surfaces d'appui usinées 31 parfaitement planes et parfaitement perpendiculaires à l'axe X. Les surfaces d'appui 30 et 31 sont disposées en correspondance et sont en contact mutuel, en permettant un bon appui de l'ossature 27 sur la plaque de fermeture 5.

Par ailleurs, le rotor 21, qui est bien visible sur les figures 1 et 3, comprend deux roues 32 qui sont disposées chacune dans un plan radial et qui sont réalisées en matériau ferromagnétique, généralement en acier.

Chacune des roues 32 comporte un disque annulaire 33 relativement épais qui est disposé face à l'une des couronnes de pôles 24 du stator, un entrefer de faible épaisseur (par exemple de 1 à 3 mm) étant laissé libre entre ce disque 33 et les pôles 24 correspondants.

Chaque disque 33 est solidaire d'une couronne d'aubages 34 formant ailettes de refroidissement, qui s'étendent tous dans le plan radial de la roue 32 correspondante.

De plus, dans l'exemple représenté sur les dessins, ces aubages s'étendent chacun dans une direction radiale, mais ils pourraient éventuellement s'étendre chacun dans une direction inclinée par rapport à la direction radiale, tout en restant dans le plan radial de leur roue 32.

Sur la face de chaque roue 32 qui est la plus éloignée du stator, les aubages 34 sont en outre entretoisés par un disque annulaire 35 relativement mince.

Ce disque 35 délimite ainsi avec le disque épais 33 un espace annulaire dans lequel sont disposés les aubages 34 et dans lequel est canalisé l'air de refroidissement des roues 32.

Par ailleurs, chaque roue 32 du rotor est montée à une extrémité axiale d'un tube intercalaire 36 en acier qui présente une forme générale cylindrique de révolution centrée sur l'axe X.

Afin de réaliser ce montage, chaque roue 32 du rotor comporte quatre bras de fixation 37 qui sont disposés à 90 degrés les uns des autres et qui sont constitués chacun par deux aubages 34 prolongés vers l'intérieur jusqu'à une platine de fixation 38 elle-même fixée au tube intercalaire 36 par une vis 39 parallèle à l'axe X.

Dans l'exemple représenté sur la figure 3, les deux aubages 34 qui forment chaque bras de fixation 37 sont séparés l'un de l'autre par un aubage 34 non prolongé radialement vers l'intérieur, mais cette disposition n'est pas limitative.

Les bras de fixation 37 s'étendent dans le plan radial de leur roue 32, sans s'étendre en biais axialement vers le plan médian du ralentisseur, comme c'était le cas dans les ralentisseurs électriques de l'art antérieur : il en résulte une plus grande facilité de réalisation des roues 32, notamment lorsque ces roues sont obtenues par moulage.

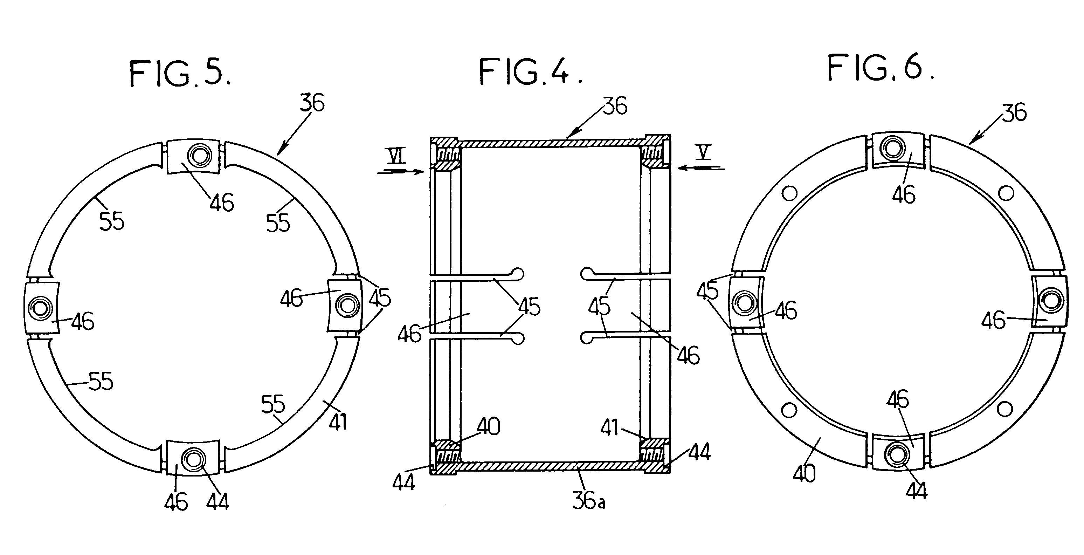

Par ailleurs, le tube intercalaire 36, qui est représenté en détail sur les figures 4 à 6, présente à ses deux extrémités axiales des première et deuxième brides sensiblement annulaires, respectivement 40, 41, dans lesquelles sont vissées les vis 39 permettant de fixer les roues 32.

Afin de limiter au maximum les jeux angulaires de montage des roues 32 sur ces brides, les vis 39 traversent des bagues 42 en acier qui sont chacune emboîtées à force à la fois dans un alésage 43 appartenant à la platine 38 correspondante, et dans un alésage 44 appartenant à la bride 40, 41 correspondante.

De plus, le tube intercalaire 36 comporte de préférence des fentes 45 qui s'étendent axialement vers l'intérieur du tube à partir de l'une ou l'autre des deux extrémités de ce tube, chaque fente 45 s'étendant sur moins de la moitié de la longueur axiale du tube, par exemple sur environ 1/3 de la longueur du tube.

Les fentes 45 sont disposées par paires en encadrant chaque vis 39, et en délimitant ainsi aux deux extrémités du tube 36 des lames 46 axiales aux extrémités desquelles sont fixés les bras 37 des roues 32.

Ces lames métalliques 46 sont suffisamment résistantes pour ne pas se déformer sensiblement sous l'effet des sollicitations extérieures subies par les roues 32, notamment :
- le poids des roues 32 (par exemple, environ 30 kg par roue),
- les sollicitations dynamiques verticales dues au roulement du véhicule, qui peuvent se traduire par exemple par une accélération allant jusqu'à 2 à 3 G suivant les cas d'utilisation,
- le couple de freinage obtenu lors du fonctionnement du ralentisseur électrique, ce couple pouvant valoir par exemple environ 2 000 à 2 500 Nm,
- et la force d'attraction magnétique subie par les roues 32 en direction des pôles 24, cette force pouvant dépasser par exemple une tonne, suivant la valeur de l'entrefer.

Par contre, les lames métalliques 46 sont dimensionnées pour pouvoir se déformer élastiquement radialement vers l'extérieur lorsque les roues 32 du rotor sont soumises à des dilatations thermiques du fait des hautes températures auxquelles elles peuvent être portées lors du fonctionnement du ralentisseur, ce qui compense l'absence de déformabilité radiale des bras de fixation 37.

Le cas échéant, les bras de fixation 37 pourraient d'ailleurs éventuellement être conçus pour pouvoir se déformer radialement. Cette déformabilité peut être obtenue par exemple en donnant une courbure suffisante aux prolongements des aubages 34 qui constituent les bras de fixation 37, lesquels bras de fixation restent de préférence situés dans le plan radial de leur roue 32.

Par ailleurs, les aubages 34 qui se prolongent radialement vers l'intérieur pour former les bras de fixation 37 présentent de préférence chacun un rétrécissement 47 selon la direction de l'axe X, entre le disque 33 et la platine 38 correspondante.

Ce rétrécissement 47 permet de diminuer la rigidité des bras 37 en flexion, ce qui limite les contraintes dues aux déformations thermiques des pièces.

Enfin, la première bride 40 du tube intercalaire 36 est fixée à un plateau 49 en acier par quatre vis 48, décalées angulairement de 45 degrés par rapport aux vis 39.

Ce plateau 49 est situé sensiblement dans le même plan radial que les platines 38 de fixation des roues 32, et il présente des encoches extérieures 50 pour laisser le passage auxdites platines 38.

Le plateau 49 est fixé au moyen de vis 51 sur la face arrière 12a de la fourche 12 du joint de cardan, dans un espace annulaire libre entre la fourche 12 et la plaque de fermeture 5.

La face arrière 12a est formée par un épaulement extérieur présenté par la fourche 12, et cette face arrière est de préférence usinée pour être parfaitement plane et parfaitement perpendiculaire à l'axe X.

Afin de garantir un montage sans jeu angulaire du plateau 49 sur la fourche 12, les vis 51 sont avantageusement complétées par des chevilles métalliques 52 emboîtées à force à la fois dans un alésage 53 qui traverse axialement le plateau 49 et dans un alésage borgne 54 qui pénètre dans la fourche 12 à partir de sa face arrière 12a (voir figure 3A).

On notera que le tube intercalaire 36 décrit ci-dessus permet de limiter efficacement l'encombrement diamétral du ralentisseur électromagnétique.

En effet, la partie centrale 36a de ce tube intercalaire, qui est comprise axialement entre les deux brides 40, 41, peut être située radialement très près des bobines 23, puisque les bras de fixation 37 des deux roues 32 ne viennent pas se rejoindre au centre des couronnes de bobines 23, au contraire des dispositifs de l'art antérieur.

En outre, du fait que la partie centrale 36a du tube intercalaire doit supporter seulement une roue 32 et non deux, cette partie centrale peut être relativement mince et présenter par exemple une épaisseur de l'ordre de 6 mm.

De plus, les brides 40, 41 du tube intercalaire 36 sont disposées radialement vers l'intérieur de la partie centrale 36a de ce tube, de sorte que le tube intercalaire ne présente sensiblement pas de partie faisant saillie vers l'extérieur, ce qui permet tout à la fois une introduction aisée du tube intercalaire 36 à l'intérieur de la couronne de bobines 23 malgré le faible jeu radial existant entre ce jeu et cette couronne, et d'autre part de limiter l'encombrement radial du tube intercalaire.

Le fait que les brides 40, 41 soient disposées vers l'intérieur du tube intercalaire ne gène en rien le fonctionnement du joint de cardan 10, dans la mesure où la bride 40 est solidaire de la fourche 12 de ce joint, tandis que la bride 41 est située axialement au-delà de l'autre fourche 13 en l'éloignant de la boîte de vitesses, c'est-à-dire au droit de l'arbre 11, beaucoup moins encombrant que le joint de cardan 10.

Enfin, pour limiter encore le jeu radial qui est nécessaire entre le joint de cardan 10 et la partie centrale 36a du tube intercalaire, la deuxième bride 41 de ce tube intercalaire présente vers l'intérieur des échancrures 55 dans ses portions intermédiaires entre les lames déformables 46.

Ainsi, on peut monter à l'intérieur du tube intercalaire 36 un gros joint de cardan, en passant les branches du croisillon 15 du joint de cardan et les deux fourches 12, 14 de ce joint de cardan dans les échancrures 55.

Le dispositif qui vient d'être décrit peut être entièrement réalisé en usine lors du montage initial de la transmission, mais il peut également être réalisé par adaptation a posteriori du ralentisseur électrique sur une transmission déjà montée dans un véhicule.

Dans ce dernier cas, on procède de préférence comme suit :
- après démontage du joint de cardan 10, on enlève au moins certaines des vis de fixation 6 de la plaque de fermeture 5,
- on usine les surfaces d'appui 30 sur la face extérieure de la plaque de fermeture 5,
- on remplace les vis 6 initiales par des vis de fixation 6 plus longues, et on fixe l'ossature 27 au carter au moyen de ces nouvelles vis, en serrant simultanément la plaque de fermeture 5 entre l'ossature 27 et le corps principal 4 du carter,
- on usine la face arrière 12a de la fourche 12, de façon qu'elle présente une surface parfaitement plane et perpendiculaire à l'axe X,
- on perce des trous filetés dans la fourche 12 à partir de sa face arrière,
- on engage la fourche 12 à l'intérieur du tube intercalaire 36 préalablement fixé au plateau 49, et on fixe la fourche 12 au plateau 49 au moyen des vis 51,
- on perce simultanément dans le plateau 49 et dans la fourche 12 les alésages 53, 54, puis on emboîte à force les chevilles métalliques 52 dans ces alésages, on remonte la fourche 12 sur l'arbre de sortie 2 de la boîte de vitesses, et on monte simultanément le flasque 25 du stator sur l'ossature 27 au moyen des vis 26,
- et enfin, on remonte complètement le joint de cardan 10 et l'arbre 11.

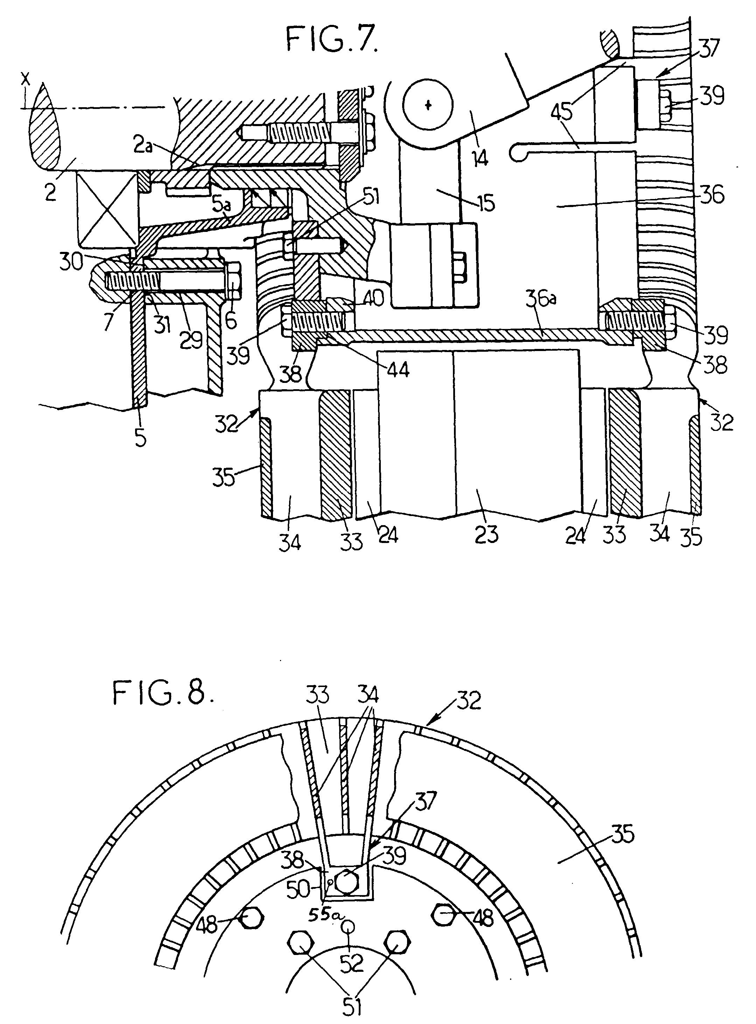

On notera que les bagues 42 servant au montage des roues 32 pourraient être avantageusement supprimées, comme représenté sur les figures 7 et 8.

Dans ce cas, on prévoit de préférence des chevilles métalliques 55a qui sont disposées à côté d'au moins certaines des vis 39 et qui sont emboîtées à force à la fois dans la platine 38 correspondante et dans la bride 40, 41 correspondante.

## Revendications

1. Transmission pour véhicule terrestre à moteur, comprenant :
- un mécanisme de transmission (1) entraîné par le moteur du véhicule et présentant un carter (3) ainsi qu'un arbre de sortie (2) rotatif autour d'un axe (X),
- un joint de cardan (10) qui est monté sur l'arbre de sortie (2) du mécanisme de transmission,
- et un ralentisseur électrique (20) à courants de Foucault comportant d'une part un stator inducteur (22) annulaire qui est monté en porte-à-faux sur le carter (3) à l'aide d'une ossature (27) et qui présente une couronne de bobines (23) disposée autour du joint de cardan (10), et d'autre part un rotor (21) qui inclut des première et deuxième roues (32), chacune de ces roues comprenant un disque induit (33) en matériau ferromagnétique et une pluralité d'aubages (34) formant ailettes de refroidissement, la première roue (32) étant proche du carter (3) et la deuxième roue (32) étant plus éloignée dudit carter, ces deux roues encadrant axialement le stator et étant solidarisées à l'arbre de sortie (2) du mécanisme de transmission au moyen d'un tube intercalaire (36) qui s'étend axialement entre des première et deuxième extrémités (40, 41) en entourant le joint de cardan (10), la première extrémité (40) du tube intercalaire étant montée sur un organe de support (49) qui est solidaire de l'arbre de sortie (2) du mécanisme de transmission et la deuxième extrémité (41) de ce tube intercalaire étant solidaire de la deuxième roue (32) du rotor,
**caractérisée en ce que** la première extrémité (40) du tube intercalaire (36) est également solidaire de la première roue (32) du rotor,
**et en ce que** les première et deuxième extrémités (40, 41) du tube intercalaire sont disposées axialement de part et d'autre de la couronne de bobines (23) du stator et de part et d'autre du joint de cardan (10).

2. Transmission selon la revendication 1, dans laquelle le tube intercalaire (36) comporte à ses deux extrémités des brides (40, 41) sur lesquelles sont fixées les deux roues (32) ainsi que l'organe de support (49) et qui font saillie radialement vers l'intérieur, le tube intercalaire (36) présentant ainsi une surface extérieure sensiblement cylindrique.

3. Transmission selon la revendication 2, dans laquelle chacune des roues (32) du rotor présente une pluralité de bras de fixation (37) qui s'étendent vers l'intérieur jusqu'à des extrémités (38) respectives fixées latéralement sur la bride correspondante du tube intercalaire au moyen de vis (39).

4. Transmission selon la revendication 3, dans laquelle au moins certaines des vis de fixation (39) des roues (32) du rotor traversent respectivement des bagues métalliques (42), chacune de ces bagues métalliques étant emboîtée à force simultanément dans deux alésages (43, 44) ménagés respectivement dans la bride correspondante (40, 41) du tube intercalaire et dans l'extrémité (38) du bras de fixation correspondant (37).

5. Transmission selon l'une quelconque des revendications 3 et 4, dans laquelle les bras de fixation (37) de la deuxième roue (32) du rotor sont au nombre de quatre et sont disposés à angle droit les uns par rapport aux autres, et la bride (41) située à la deuxième extrémité du tube intercalaire forme quatre échancrures intérieures (55) disposées angulairement entre les bras de fixation (37) de la deuxième roue.

6. Transmission selon l'une quelconque des revendications 3 à 5, dans laquelle l'organe de support du tube intercalaire est un plateau (49) qui est vissé latéralement sur la bride (40) située à la première extrémité du tube intercalaire et qui présente extérieurement des encoches (50) dans lesquelles sont reçues les extrémités (38) des bras de fixation (37) de la première roue (32) du rotor.

7. Transmission selon l'une quelconque des revendications précédentes, dans laquelle chacune des roues (32) du rotor présente une pluralité de bras de fixation (37) qui s'étendent tous selon un même plan radial.

8. Transmission selon l'une quelconque des revendications précédentes, dans laquelle le mécanisme de transmission est une boîte de vitesses.

## Patentansprüche

1. Getriebe für ein motorisiertes Landfahrzeug umfassend:
- eine Getriebeeinrichtung (1), die von dem Fahrzeugmotor angetrieben ist und ein Gehäuse (3) sowie eine sich um eine Achse (X) drehende Abtriebswelle (2) umfaßt,
- ein Kardangelenk (10), das an der Abtriebswelle (2) der Getriebeeinrichtung befestigt ist, und
- einen elektrischen Wirbelstromretarder, der einerseits einen ringförmigen Stator-Induktor (22), der an dem Gehäuse (3) mit Hilfe einer Tragkonstruktion (27) fliegend gelagert ist und einen Spulenring (23) aufweist, der um das Kardangelenk (10) herum angeordnet ist, und andererseits einen Rotor (21) umfaßt, der ein erstes und zweites Rad (32) umfaßt, wobei jedes dieser Räder einen Scheibenläufer (33) aus ferromagnetischem Material und eine Vielzahl von Schaufeln umfaßt, die Kühlrippen bilden, wobei das erste Rad (32) in der Nähe des Gehäuses (3) und das zweite Rad (32) entfernter zum Gehäuse liegen, wobei diese beiden Räder den Stator axial einrahmen und mit der Abtriebswelle (2) der Antriebseinrichtung mittels eines zwischenliegenden Rohres (36) befestigt sind, das sich in Axialrichtung zwischen dem ersten und zweiten Ende (40, 41) erstreckt, während es das Kardangelenk (10) umgibt, wobei das erste Ende (40) des zwischenliegenden Rohres an einem Lagerteil (49) befestigt ist, das mit der Abtriebswelle (2) der Getriebeeinrichtung fest verbunden ist, und das zweite Ende (41) dieses zwischenliegenden Rohres mit dem zweiten Rad (32) des Rotors fest verbunden ist,
**dadurch gekennzeichnet, daß** das erste Ende (40) des zwischenliegenden Rohres ebenfalls mit dem ersten Rad (32) des Rotors fest verbunden ist, **und daß** das erste und zweite Ende (40, 41) des zwischenliegenden Rohres in Axialrichtung an beiden Seiten des Spulenrings (23) des Stators und an beiden Seiten des Kardangelenks (10) angeordnet sind.

2. Getriebe nach Anspruch 1, bei dem das zwischenliegende Rohr (36) an seinen beiden Enden Flansche (40, 41) umfaßt, an welchen die beiden Räder (32) sowie das Lagerteil (49) befestigt sind und die radial nach innen ragen, wobei das zwischenliegende Rohr (36) somit eine äußere, im wesentlichen zylindrische Oberfläche aufweist.

3. Getriebe nach Anspruch 2, bei dem jedes der Räder (32) des Rotors eine Vielzahl von Befestigungsarmen (37) umfaßt, die sich nach innen bis zu den Enden (38) erstrecken, die jeweils lateral an dem entsprechenden Flansch des zwischenliegenden Rohres mittels Schrauben (39) befestigt sind.

4. Getriebe nach Anspruch 3, bei dem wenigstens einige der Befestigungsschrauben (39) für die Räder (32) des Rotors jeweils metallische Ringe (42) durchdringen, wobei jeder dieser metallischen Ringe simultan in zwei Bohrungen (43, 44) eingepreßt ist, die jeweils in dem entsprechenden Flansch (40, 41) des zwischenliegenden Rohres und an dem Ende (38) des entsprechenden Befestigungsarmes (37) vorgesehen sind.

5. Getriebe nach einem der vorangegangenen Ansprüche 3 und 4, bei dem vier Befestigungsarme (37) des zweiten Rades (32) des Rotors vorgesehen und in einem rechten Winkel zueinander angeordnet sind und der Flansch (41), der an dem zweiten Ende des zwischenliegenden Rohres angeordnet ist, vier bogenförmige, innere Ausschnitte (55) bildet, die winklig zwischen den Befestigungsarmen (37) des zweiten Rades angeordnet sind.

6. Verfahren nach einem der Ansprüche 3 bis 5, bei dem das Lagerteil des zwischenliegenden Rohres eine Platte (49) ist, die lateral an den Flansch (40) geschraubt ist, der an dem ersten Ende des zwischenliegenden Rohres angeordnet ist, und die außen Vertiefungen (50) aufweist, in welchen die Enden (38) der Befestigungsarme (37) des ersten Rades (32) des Rotors aufgenommen sind.

7. Getriebe nach einem der vorangegangenen Ansprüche, bei dem jedes der Räder (32) des Rotors eine Vielzahl von Befestigungsarmen (37) aufweist, die sich alle in einer gemeinsamen, radialen Ebene erstrecken.

8. Getriebe nach einem der vorangegangenen Ansprüche, bei dem die Getriebeeinrichtung ein Schaltgetriebe ist.

## Claims

1. A transmission system for a self-propelled land vehicle, comprising:
. a transmission mechanism (1) driven by the engine of the vehicle and having a case (3) and an outlet shaft (2) rotatable about an axis (X);
. a universal joint (10) mounted on the outlet shaft (2) of the transmission mechanism; and
. an eddy current electrical retarder (20) comprising both an annular inductor stator (22) cantilevered-out from the case (3) by means of a framework (27) with a ring of coils (23) disposed around the universal joint (10), and a rotor (21) including first and second wheels (32), each of the wheels comprising a core disk (33) of ferromagnetic material and a plurality of blades (34) forming cooling fins, the first wheel (32) being close to the case (3) and the second wheel (32) being further away from said case, said two wheels being disposed axially on either side of the stator and being secured to the outlet shaft (2) of the transmission mechanism by means of an intermediate tube (36) extending axially between first and second ends (40, 41) surrounding the universal joint (10), the first end (40) of the intermediate tube being mounted on a support member (49) secured to the outlet shaft (2) of the transmission mechanism, and the second end (41) of said intermediate tube being secured to the second wheel (32) of the rotor;
**characterized in that** the first end (40) of the intermediate tube (36) is also secured to the first wheel (32) of the rotor; and
**and in that** the first and second ends (40, 41) of the intermediate tube are disposed axially on either side of the ring of coils (23) of the stator and on either side of the universal joint (10).

2. A transmission system according to claim 1, in which the intermediate tube (36) includes flanges (40, 41) at its two ends with the two wheels (32) being fixed thereto together with the support member (49) and projecting radially inwards, the intermediate tube (36) thus having an outside surface that is substantially cylindrical.

3. A transmission system according to claim 2, in which each of the wheels (32) of the rotor presents a plurality of fixing arms (37) extending inwards to respective ends (38) fixed laterally to the corresponding flange of the intermediate tube by means of screws (39).

4. A transmission system according to claim 3, in which at least some of the fixing screws (39) for the wheels (32) of the rotor pass respectively through metal rings (42), each of said metal rings being engaged as a force-fit simultaneously in two bores (43, 44) formed respectively in the corresponding flange (40, 41) of the intermediate tube and in the end (38) of the corresponding fixing arm (37).

5. A transmission system according to anyone of claims 3 and 4, in which the fixing arms (37) of the second wheel (32) of the rotor are four in number and are disposed at right angles relative to one another, and the flange (41) situated at the second end of the intermediate tube forms four internal regions of scalloping (55) disposed angularly between the fixing arms (37) of the second wheel.

6. A transmission system according to anyone of claims 3 to 5, in which the support member for the intermediate tube is a slab (49) screwed laterally to the flange (40) situated at the first end of the intermediate tube and having outwardly directed notches (50) in which the ends (38) of the fixing arms (37) of the first wheel (32) of the rotor are received.

7. A transmission system according to anyone of the preceding claims, in which each of the wheels (32) of the rotor has a plurality of fixing arms (37) all extending in the same radial plane.

8. A transmission system according to anyone of the preceding claims, in which the transmission mechanism is a gear box.
